# EUROPEAN PATENT APPLICATION

(11) **EP 1 662 277 A1**
(43) Date of publication of application: **31.05.2006**
(21) Application number: 04747588.4
(22) Date of filing: 15.07.2004
(51) Int. Cl.: G02B 5/02, F21Y 101/02

(54) **SURFACE LIGHT SOURCE DEVICE**

(30) Priority: 25.07.2003 JP 2003280168
(71) Applicant: AZ Electronic Materials (Japan) K.K., Tokyo 113-0021 (JP)
(72) Inventor: HARADA, Takamasa, c/o Clariant(Japan)K.K., Bunkyo-ku, Tokyo 11386 (JP); KITA, Fumio, c/o Clariant AZ(Deutschland) AG, Wiesbaden 65203 (DE)
(74) Representative: Isenbruck, Günter
(86) International application number: PCT/JP2004/010122
(87) International publication number: WO 2005/010431

(57) **Abstract**

A surface light source device comprises a light emitting section (11) made of a single spot light source, a light guide plate (12), a reflective surface (13) provided on the back side of the light guide plate, and a prism pattern (15). On the light emitting surface side of the light guide plate (12), there is provided a directional light scattering film (14) consisting of at least two phases having different refractive indexes and scattering light when transmitting it. One phase of a larger refractive index includes a plenty of areas having a columnar structure extending in the thickness direction of a film and arranged to be perpendicular to a normal to the film, and exhibiting a maximum scattering angle of 10-40°.

## Description

### Technical Field

The invention relates to a surface light source device, in particular a surface light source device used as a backlight in an image display device such as a liquid crystal display device or the like.

### Background Technology

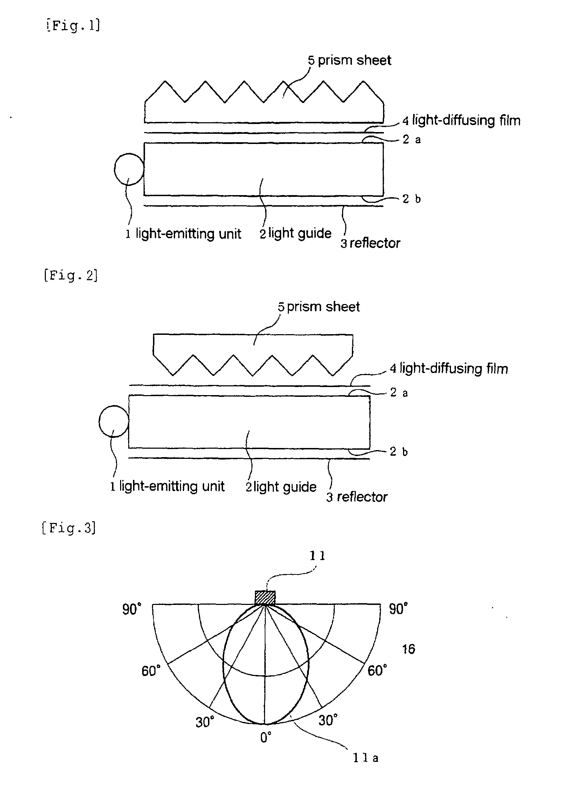

Surface light source devices are conventionally used in image display devices such as liquid crystal display devices to illuminate the display panel. These surface light source devices generally comprise a light-emitting unit, a light guide, a reflector, a prism sheet and the like. A conventional surface light source device will now be described with reference to the drawings. Fig. 1 and Fig. 2 are schematic cross-sections which illustrate an example of a conventional surface light source device, and comprise light-emitting unit 1, light guide 2, reflector 3, light-diffusing film 4, and prism sheet 5. In the surface light source device of Fig. 1, the light-emitting unit comprises a light-emitting diode (LED) which is a point light source, or a cold cathode fluorescent tube which is a line light source (see for example Japanese Patent No. 2001-143512). In recent years point light sources such as light-emitting diodes have been employed as the light source for small and medium-sized liquid crystal display elements in mobile telephones and the like due to the requirement for smaller devices and lower power consumption, and devices which employ a plurality of light-emitting diodes to ensure that the light from a point light source does not become uneven are known to the art (for example Japanese Patent No. 2001-281456). With these types of device, light-emitting unit 1 is positioned facing an end surface (the surface on which light is incident) of light guide 2. Light guide 2 is formed from transparent resin with a large refractive index such as polycarbonate resin or a metacrylic resin. Where necessary the rear surface (lower surface) 2b of the light guide is provided with a diffusion pattern such as printed dots of diffuse reflectance ink or the like, or processed to form an uneven surface. Reflector 3 has a reflective surface comprising aluminum, silver or the like with a high reflective index, both ends of the reflector being made to adhere to the rear surface of the light guide using double-sided tape not shown in the diagram. A reflective surface of aluminum, silver or the like can be formed by direct vacuum deposition on reverse surface 2b of the light guide, and the reflector may be omitted. Prism sheet 5 is also arranged such that the prism patterns with their triangular section run parallel to one another, being disposed on light-output surface 2a of light guide 2, the prism patterns being positioned away from the light guide in the surface light source device of Fig. 1, and facing the light guide in the surface light source device of Fig. 2.

With these conventional surface light source devices, light output from light-emitting unit 1 is diffused upwards by the reflector or the diffusion pattern disposed below the light guide either after being reflected at upper surface 2a or rear surface 2b of the light guide, or without being reflected at all. The angles of the prism, the uneven angles of the diffusion pattern, the dot printing of the diffuse reflectance ink and the like are optically designed to ensure that brightness is increased in the surface direction and that the whole surface is uniformly illuminated with light condensed to an extremely narrow angle on the other surface by the condensing effect of the prism on light reaching the prism sheet.

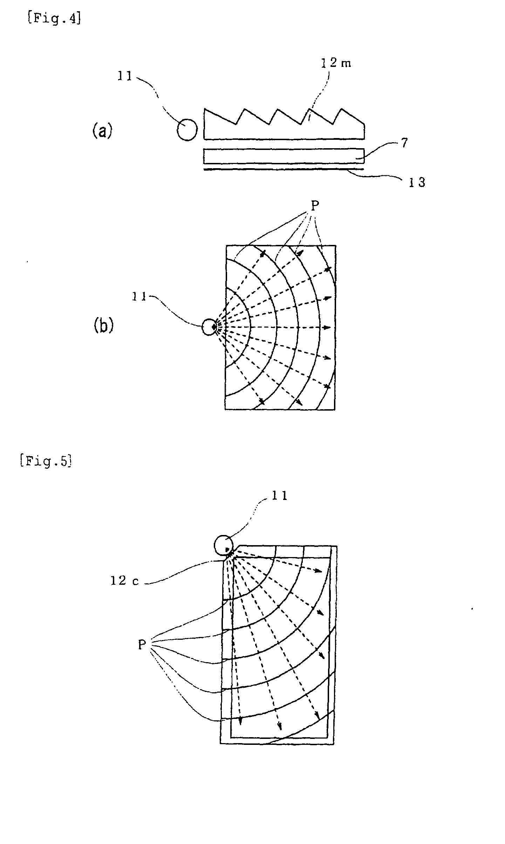

However although a light-emitting diode such as a chip-type LED or the like is employed as the point light source in conventional light-emitting units, this type of light-emitting diode has a directionality, as shown in Fig. 3, with the light going directly downwards at an angle of 0° from the point light source, light-emitting diode 11, giving out the strongest light and reaching the furthest. The light generated at angles of 30° and 60° on both sides of the 0° angle is weak and does not reach far, so the range of uniform light is the elongated oval of pattern 11a. For this reason, when using a light-emitting diode with directionality such as a chip-type LED or the like as a light source, a light guide with microprisms 12m as shown in Fig. 4(a) is employed to unify the quantity of light output from the surface light source device, pattern P of these microprisms forming concentric circles centered on point light source 11 as shown in Fig. 4(b). By this means the axis of the light output from the point light source and pattern P of the microprism are at 90° to one another in every position, and are reflected by the microprism with the same density both at the center and edges of the light guide, improving both the brightness of the output light, and the light balance compared to conventional devices. However even in this case, the difficulty remains that light output from the point light source, light-emitting diode 11, has the directionality shown in Fig. 3, and so although portions centered on the light from the central part output laterally from point light source 11 in Fig. 4(b) are bright, the four corners are dark, the upper left and bottom left corners particularly so. To resolve this difficulty, it has been proposed to place point light source 11 in a corner (angle) 12c of the light guide, or to place the center of the concentric circle pattern P at or in the vicinity of the corner of the light guide, as proposed for example in Japanese Patent No. 2001-143512.

Now, when using a surface light source device which employs this kind of point light source as the backlight for a liquid crystal panel, the effective viewing angle for a screen on the liquid crystal display panel is normally around 30° (±15°). However, with the surface light source device shown in Fig. 1 or the surface light source device shown in Fig. 2, the directionality of the light output from the prism pattern is as shown by the solid line in Fig. 3, and due to the characteristics of this directional light point light source, the directionality of the light output from the prism pattern is liable to cause radial patterns of unevenness in the light of the type shown by the solid curve in Fig. 3, unevenness in the brightness being particularly visible from an oblique direction. This is especially noticeable where a single point light source is employed rather than a plurality of point light sources. As a result, the problem of visible unevenness in brightness can be resolved to a certain extent by increasing the number of point light sources. However, increasing the number of point light sources raises the issue of increased cost. It is thus desirable to have a surface light source device in which a single point light source does not cause this kind of unevenness visible from an oblique direction. The same thing is true for surface light source devices with concentric circle prism patterns as shown in Fig. 4 and Fig. 5.

Thus the purpose of the invention is to provide a surface light source device capable of outputting light efficiently with much less visible unevenness in brightness, particularly with less visible unevenness in brightness when the display screen is viewed from an oblique direction, and moreover which is bright when the screen is observed from front on.

### Disclosure of Invention

Having made a detailed study of this problem, the inventors have been able to discover that it can be resolved by positioning a light-diffusing film with directionality beside the light-outputting surface of said light guide. Directionality refers to the fact that the degree of diffusion differs with direction, and unevenness in brightness can be prevented by causing the angles (directionality) at which diffusion occurs in the light-diffusing sheet to appropriately correspond with the angles at which unevenness in brightness occurs.

In other words, the invention relates to the surface light source device cited in (1)-(7) below:
(1) A surface light source device having a light-emitting unit comprising a point light source and a light guide, a reflecting surface being provided on the reverse side of the light guide, and also having a prism pattern, characterized in that a directional light-diffusing film is provided beside the light-outputting surface of the light guide which diffuses and allows light to pass, comprising two phases with differing refractive indices, the phase with the greater refractive index including a plurality of regions with a columnar structure extending in the direction of the thickness of the film, said columnar structure being perpendicular to the normal direction of the film, and whose maximum diffusion angle is between 10°-40°.

(2) The surface light source device cited in (1), characterized in that said directional light-diffusing film is bonded to said light guide or prism sheet with prism pattern using a light-diffusing adhesion agent containing microparticles with a diameter of 0.1-50 µm.

(3) The surface light source device cited in (2), characterized in that said light-diffusing adhesion agent contains minute particles with diameters in the range of 1-100 nm whose refractive index is 1.8 or greater.

(4) The surface optical source device cited in (2) and (3), characterized in that the refractive index of said light-diffusing adhesion agent is 1.55 or greater.

(5) The surface optical source device cited in any of (1)-(4), characterized in that said columnar structure has a structure such that the refractive index varies gradually along the axis line of said columnar structure.

(6) The surface light source device cited in any of (1)-(5), characterized in that said light-emitting unit is positioned facing the center of the end surface of the light guide.

(7) The surface light source device cited in any of (1)-(6), characterized in that said light-emitting unit is positioned facing the angled end surface of the light guide.

### Brief Description of the Drawings

(Fig. 1) Schematic cross-section of an example of a conventional surface light source device.
(Fig. 2) Schematic cross-section of another example of a conventional surface light source device.
(Fig. 3) Diagram illustrating the irradiation intensity of a point light source.
(Fig. 4) Schematic cross-section and plan view of a conventional example of a surface light source device with the point light source positioned at the center of the end surface of the light guide on which light is incident.

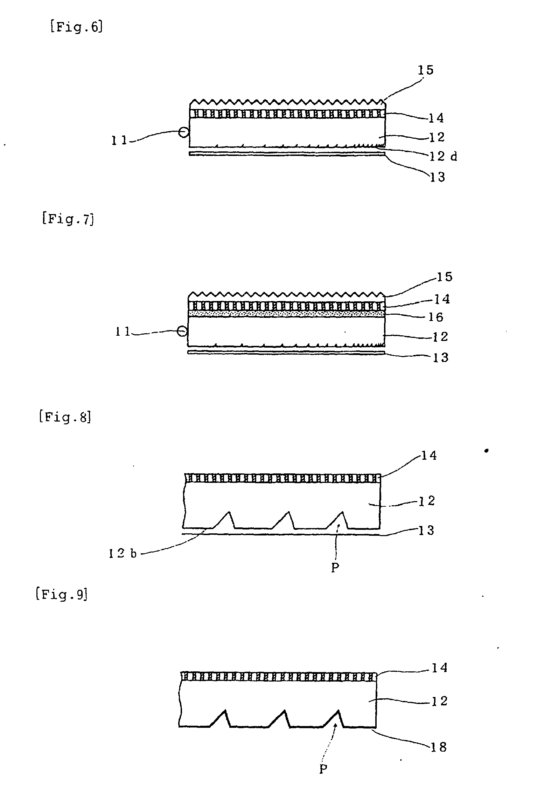

(Fig. 5) Illustration of the structure of a conventional surface light source device in which a point light source is positioned at the angled end surface of the light guide on which light is incident.
(Fig. 6) Schematic cross-section of an example of a surface light source device of the invention.
(Fig. 7) Schematic cross-section of another example of a surface light source device of the invention.
(Fig. 8) Partial schematic cross-section of a still further example of a surface light source device of the invention.

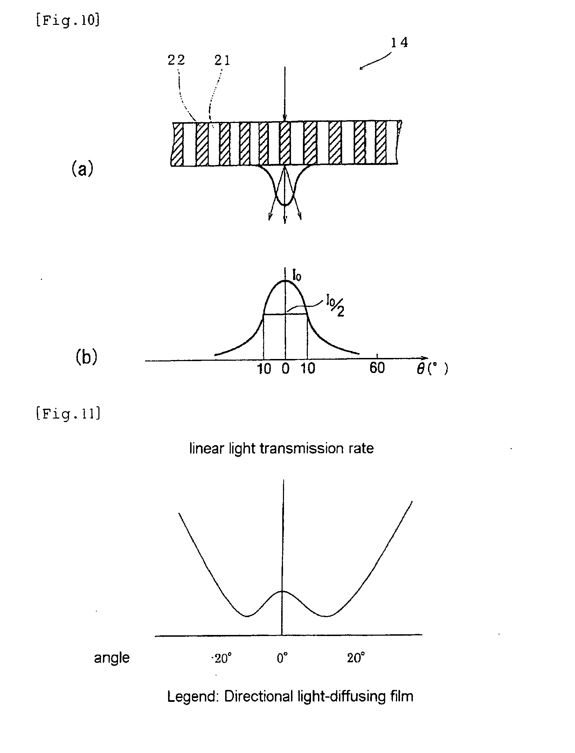

(Fig. 9) Partial schematic cross-section of a still further example of a surface light source device of the invention.
(Fig. 10) Partial schematic cross-section of the directional light-diffusing film having regions of a columnar structure with high refractive index in the polymer film, and a diagram of the diffusion and light transmission characteristics of light incident vertically.
(Fig. 11) Diagram illustrating the light transmission characteristics of the directional light-diffusing film.

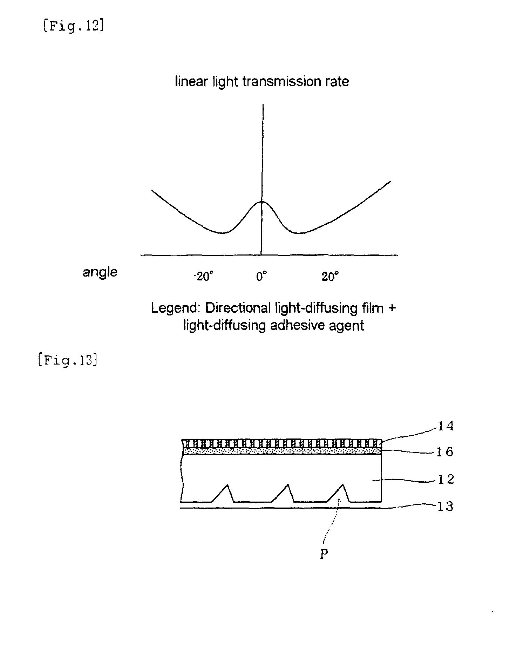

(Fig. 12) Diagram illustrating the light transmission characteristics in a directional light-diffusing film which combines a directional light-diffusing film and a light-diffusing adhesive agent layer.
(Fig. 13) Partial schematic cross-section of a still further example of the surface light source device of the invention.

### Detailed Description

The invention will now be described in further detail with reference to the drawings. Fig. 6 is a schematic cross-section illustrating an embodiment of the surface light source device of the invention, which has light-emitting unit 11 comprising a point light source, light guide 12, reflector 13 with a reflecting surface provided on the rear surface of the light guide, and prism sheet 15 having directional light-diffusing film 14 and a prism pattern. A schematic cross-section illustrating another embodiment of the surface light source device of the invention is shown in Fig. 7. In Fig. 7, directional light-diffusing film 14 of the surface light source device in Fig. 6 is bonded to light guide 12 by means of light-diffusing adhesive agent layer 16. A partial schematic cross-section of a still further embodiment of the surface light source device of the invention is shown in Fig. 8 and Fig. 9. In Fig. 8 and Fig. 9, prism pattern P is provided on lower surface 12b of light guide 12. Where prism pattern P is provided on lower surface 12b of the light guide, prism sheet 15 is omitted. Furthermore, as shown in Fig. 9, reflective layer 18 of vacuum-deposited metal or the like may be provided on the lower surface of the light guide. It should be noted that descriptions of items identical to those shown in Fig. 6 have been omitted in Figs. 7-9. A more specific description of the light-emitting unit, light guide, reflector, directional light-diffusing film, prism sheet and the like will now be given for the surface light source device of the invention.

First of all, the light-emitting unit in an image display device such as a liquid crystal display device or the like may be of any kind as long as it is a point light source of the type used as the light source for a conventional backlight. A light-emitting diode (LED) is used which may comprise a variety of materials such as GaP, GaAlAs, and InGaAlP and their variants. In the invention, the light-emitting unit is a single LED lamp, and, as shown in Fig. 4 and Fig. 5, is normally positioned at the center or on an angle of the end surface to which light is incident on the light guide, and facing the end surface of light guide 12 on which light is incident.

Light guide 12 is a plate-shaped member comprising transparent material with a large refractive index. Any materials used as the material for a conventional light guide will be suitable as materials for the structure of the light guide, but polycarbonate resin and metacrylic resin are particularly preferable from the point of view of their transparency and refractive index. The configuration of the light guide may also be similar to that of conventional ones, and the rear surface (lower surface) 12b of the light guide may also be provided where necessary with an uneven configuration or printed diffusion pattern 12d. Furthermore, as shown in Fig. 8, prism pattern P is provided on the lower surface of light guide 12, by which means the light conveyed within the light guide is reflected, and it may be arranged to be output from the output surface of the surface light source device.

Any type of reflector may be used providing that it is of a light-reflecting type. Preferred types of reflector include a metal sheet such as aluminum foil or the like, a metal plate or sheet of synthetic resin or the like, or a sheet with vacuum-deposited metal on which a light-reflecting surface of silver, aluminum or the like can be formed on the plate or sheet, but are not limited to these, and any type of reflector used as a reflector in a conventional surface light source device may be used. A white diffusion plate can also be used as a reflector. Furthermore, as shown in Fig. 9, there is no need for a reflector where a reflective film has been formed with a white diffusion plate, a reflector layer comprising a layer of metal vacuum-deposited on the rear surface of the light plate, or the like.

Fig. 10(a) shows a partial schematic cross-section of directional light-diffusing film 14 which, as used in the surface light source device of the invention, represents a major characteristic of the invention. Directional light-diffusing film 14 is a light-diffusing film which diffuses and allows light to pass, comprising two phases 21, 22 with differing refractive indices, the phase 22 with the greater refractive index including a plurality of regions with a columnar structure extending in the direction of the thickness of the film. Directional light-diffusing film 14 is positioned on top of said light guide 2. Where prism sheet 15 is used in the surface light source device of the invention, directional light-diffusing film 14 may be positioned between prism sheet 15 and light guide 12, and may also be positioned on prism sheet 15.

The light-diffusing phenomena occurring in this directional light-diffusing film will now be explained with reference to Figs. 10(a) and (b). In Fig. 10(a), a plurality of columnar structures 22 which are regions of a high refractive index are formed. With this directional light-diffusing film, cylindrical regions 22 with a high refractive index and a diameter close to the wavelength of the light are formed in polymer film 21 of low refractive index perpendicular to the surface of the film. These cylindrical regions 22 with a high refractive index function as columnar lenses by being formed so that the refractive index gradually varies at the interface between cylindrical regions 22 of high refractive index and regions 21 of low refractive index for example, and light which is incident vertically on the film, in other words parallel to the axis of the columns, can be made to show a diffusion with a Gaussian distribution having a half width of approximately 10-20° for example. With directional light-diffusing film 14 shown in Fig. 10(a), as the light becomes incident at an increasingly oblique angle to the axis of the columns, with the incident angle to film 14 increasing, diffusion of the light decreases and the transmission rate increases. For example at angles of 45-60° to the surface of the film the light is hardly diffused at all, being transmitted through.

Fig. 10(b) indicates the intensity of the light transmitted at output angle θ when the light incident at an angle perpendicular to the surface of the film (angle of incidence 0°) is transmitted through this film. The intensity of the transmitted light forms a Gaussian distribution, and diffuses out with this half width, allowing a choice to be expressed. In Fig. 10(b) the half width is 10°.

There is no limitation on the size of the columnar structures in the light-diffusing film, but it is preferable that the range of the diameter be between 10 nm and 100 µm. There is no limitation on the thickness of the film either, but it is generally in the range of approximately 2-100 µm. Moreover, the shape of the columnar structure is not limited to a cylindrical shape, but may be of oval or other configuration, and there is no limitation on the size of these shapes. In addition, each of the columnar structures may be positioned regularly or irregularly.

There is no particular limitation on the method of forming the columnar structure for the light-diffusing film, which may be selected from any of the existing conventional methods, but the preferred method is a method which selectively irradiates a radiation-sensitive polymer film to form columnar structures with a high refractive index. Prior to radiation the polymer film may be a pre-polymer or a monomer, and it may be polymerized where necessary after the radiation using a method such as heating. At this time the preferred method is a method whereby the radiation-sensitive polymer film is irradiated with the radiation at a set angle via a mask with the desired pattern formed on it, and using this method it is possible to form a columnar structure with a gradually varying refractive index at the interface between the columnar structure and the base film. The method of forming the mask may be any method conventionally used. As another method of forming the columnar structure, the radiation beam may be irradiated onto the radiation-sensitive polymer film at a set angle with only the required parts exposed, thus polymerizing the radiation-sensitive polymer film directly without using a mask. There is also a method whereby apertures are formed in the polymer film using a laser beam or another method, with material of a high refractive index being filled into the apertures thereafter. There is no particular limitation on the material for the radiation-sensitive polymer film, but it may for example be a type that employs commercially available material such as DuPont's OMNIDEX (registered trademark) sold as HRF 150 and HRF 600.

The refractive index of lower refractive index region 21 which comprises the base material of the polymer film and the refractive index of the high refractive index region 22 are not limited by the invention, and may be selected as appropriate to the light-diffusing characteristics required, but are preferably in the range of 1.2-1.8, and more preferably in the range 1.35-1.8. Material with a double refractive index is undesirable due to the coloration effect, but material which exhibits double refraction may be used where the double refractive index falls within an acceptable range. It is preferable that the actual material for the base polymer film and high refractive index regions have a high rate of light transmission. The difference between the refractive index of the base material of the polymer film and the high refractive index regions is generally set to be within the range of 0.005-0.2. With a refractive index of less than 0.05, it is not easy to achieve adequate diffusion characteristics. The refractive indices of the polymer film base and high refractive index regions may be a so-called step index type which rapidly changes at the interface between the two phases, but the so-called graded index type which forms columnar structures having refractive indices that gradually vary is preferable due to the desirable diffusion characteristics.

Fig. 11 shows an example of the transmission characteristics of the light-diffusing film used in the invention. Light incident vertically on the light-diffusing film (angle of incidence 0°) is transmitted to a certain extent, but as the angle of incidence increases the diffusion increases, reaching a maximum at a specific angle. In Fig. 11 the diffusion is at a maximum at ±15°. For example, light incident at angles of between 45°-60° to the surface of the sheet is transmitted with virtually no diffusion. This is a very special optical characteristic, and by employing this characteristic it is possible to eliminate unevenness in brightness in a surface light source device using a point light source. In other words, it is possible to eliminate unevenness conventionally visible in the light when observing at an oblique angle by diffusing the light output in the oblique direction where unevenness in the light from a point light source, especially unevenness in the light generated at a direction of 0° from the direction of the light emitted from the point light source shown in Fig. 3 (for example, the solid curve shown in Fig. 3) is visible when viewing an image display device obliquely, by ensuring that the diffusion angle of the directional light-diffusing film broadly matches the oblique observation angle where unevenness in the light is likely to occur. It should be noted that it is possible to define the AOV (Angle Of View) as a parameter for light diffusion. The smaller the AOV, the less the diffusion characteristics, and light is seen to be transmitted. When a laser light is directed at the film experimentally, light intensity can be measured through 180° by rotating the light-emitting unit. The AOV is defined as the angle of the half width of the profile of the light intensity. The AOV of the light-diffusing film shown in Fig. 11 is less than 10° in the vertical direction, and it shows a linear light transmission rate of greater than 5%, indicating that there is very little diffusion. The AOV in the 0° direction and linear light transmission rate can be easily varied with the difference in the refractive index between regions of high refractive index in the directional light-diffusing film and the lower refractive index of the polymer film, the density and the diameter of the columnar structures. The maximum diffusion angle can also be controlled as desired with the difference in the refractive index between regions of high refractive index in the directional light-diffusing film and the lower refractive index of the polymer film, the diameter of the columnar structures, the thickness of the film and the obliquity of the angle to the axis of the columnar structures.

The three main characteristics of said light-diffusing film can be summarized as follows:
(1) the directional light-diffusing film comprises at least two phases having different refractive indices, diffuses and transmits the light, and has lens-like columnar structures preferably with a refractive index which gradually varies.
(2) at least one of the phases with a large refractive index in said directional diffusing film is a columnar structure perpendicular to the direction of thickness of the film, and does not cause diffusion in the perpendicular direction.
(3) the axes of the columnar structures perpendicular to the direction of thickness of said film run parallel to one another, and their axes are in the normal direction of the film.
Item (2) is a particularly necessary characteristic to ensure light is output in a vertical direction without impeding the condensing of the light collected by the light guide and prism sheet.

The light-diffusing adhesive agent used in the invention containing microparticles with diameters of 0.1-50 µm will now be described. In the invention, the light-diffusing adhesive agent causes the light-diffusing film and the light guide to bond together, and is used as it forms light-diffusing adhesive layer 16 in which light is diffused uniformly between the light-diffusing film and the light guide. This kind of light-diffusing adhesive agent can be manufactured using conventional methods known to the art, and is generally manufactured by including a filler within the base resin of the adhesive agent.

Examples of the base resin of the light-diffusing adhesive agent include polyester resins, epoxy resins, polyurethane resins, silicon resins, acrylic resins and the like. These may be used singly or in compounds of two or more. Acrylic resins in particular are superior for their reliable resistance to water, heat and light, have good adhesive power and transparency, being preferable as it is easy to adjust their refractive index to suit the liquid crystal display. Examples of acrylic adhesive agents include acrylic acid and its esters, metacrylic acid and its esters, acryl amide, homopolymers of acryl monomers such as acrylonitrile or copolymers of these, and further copolymers of at least one of said acryl monomers and aromatic vinyl monomers such as vinyl acetate, anhydrous maleic acid and styrene. In particular, with main monomers such as ethylene acrylate, butyl acrylate and 2-ethylhexyl acrylate which express adhesive properties, monomers such as vinyl acetate, acyrlonitrile, acrylamide, styrene, metacrylate and methyl acrylate which act as cohesive components, copolymers comprising functional monomers such as metacrylic acid, acrylic acid, itaconic acid, hydroxy ethyl acrylate, hydroxy propyl metacrylate, dimethyl amino ethyl metacrylate, acrylamide, methylol acrylamide, glycidyl metacrylate and anhydrous maleic acid which further improve adhesion and provide a starting point for bridging, Tg (the glass transition point) is between -60°C and -15°C, compounds with a weighted average molecular weight of between 200,000 and 1,000,000 being preferable.

As a hardening agent for the light-diffusing adhesive agent, bridging compounds such as metal chelates, isocyanates and epoxies can be used singly or in compounds of two or more as necessary. When containing a filler to be described later, this kind of acrylic adhesive agent will preferably be mixed so as to have an adhesive force in the range of 100-2000 g/25mm. With an adhesive force of less than 100-2000 g/25mm resistance to the environment is impaired, and in particular there is the danger that separation will occur at high temperatures and humidities, yet when greater than 2000 g/25mm there is the disadvantage that the film cannot be removed and reaffixed, or where it can that the adhesive agent will remain behind. The refractive index of acrylic adhesive agents should preferably be in the range of 1.45-1.70, and in particular in the range of 1.5-1.65.

General examples of the filler included in the structure of the light-diffusing adhesive agent to diffuse light include white inorganic pigments such as silica, calcium carbonate, aluminum hydrocarbonate, magnesium hydrocarbonate, clay, talc, and titanium dioxide, and transparent or white organic pigments such as acrylic resin, polystyrene resin, epoxy resin, and silicon resin. When selecting an acrylic adhesive agent, silicon beads and epoxy resin beads are preferred as they exhibit superior dispersal with respect to the acrylic adhesive agent, and a uniform and high quality light diffusion can be obtained. The shape of the filler should preferably be round, which permits a uniform diffusion of light.

The diameters of the microparticles of this filler should be in the range of 0.1-50 µm, and preferably between 0.1-20 µm, and more preferably in the range of 0.5 to 10 µm. The range of 1-10 um is particularly preferred. If the diameter of the microparticles is less than 0.1 µm, the filler does not have the desired effect, the diffusion of the light suffers and the background of the image is liable to become tinged with an aluminum colour. At the same time it is necessary to disperse the light as finely as possible to ensure paper-white quality, and if the diameter of the microparticles exceeds 50 µm, the particles are too coarse and the background of the image acquires a satin finish, reducing the paper-white effect and causing the contrast of the image to deteriorate.

The difference between the refractive index of the filler in the invention and the refractive index of the adhesive agent needs to be between 0.05-0.5, and preferably within the range of 0.05-0.3. If the difference in the refractive index is less than 0.05, light is not diffused, and a satisfactory paper-white effect cannot be obtained. Moreover, if the difference in the refractive index exceeds 0.5, the internal diffusion is too large, the overall light transmission rate deteriorates and the paper-white effect cannot be obtained. Furthermore, it is preferable that the refractive index of the filler be lower than the refractive index of the adhesive agent because it is easier to adjust, and improves productivity.

The quantity of filler to be included in the base resin of the adhesive agent will preferably be in the range of 1-40% by weight, and particularly between 3-20% by weight. If there is less than 1% of filler by weight, it is difficult for the filler to achieve the effect of diffusing the light and light-diffusing deteriorates, making it difficult to achieve improved screen brightness and visibility over a wide viewing angle, the effect of the invention. At the same time if the amount of filler included exceeds 40% by weight, the adhesion of the light-diffusing layer is decreased and it is liable to peel off, with the danger that durability will be reduced and it will not perform its function as a light-diffusing layer.

The optimal filler for inclusion in the light-diffusing film is plastic beads, ones with good transparency and a refractive index whose difference from that of the matrix resin is within the above-mentioned range being preferable. Preferred types of such plastic include melamine beads (refractive index; 1.57), acrylic beads (refractive index; 1.49), acryl-styrene beads (refractive index; 1.54) polycarbonate beads, polyethylene beads, and vinyl chloride beads. Inorganic fillers such as cerium oxide (CeO₂; refractive index; 1.63) may also be used. In the case of cerium oxide, microparticles with a diameter of around 5 nm can be obtained, but as explained above those with a diameter in the range of 0.1-50 µm are the optimal choice.

In a comparison of the refractive indices of filler, where the refractive index of the resin used is low, microparticles with a high refractive index such as inorganic microparticles of TiO₂ (refractive index; 2.3-2.7), Y₂O₃ (refractive index; 1.87), La₂O₃ (refractive index; 1.95), ZrO₂ (refractive index; 2.05) with a particle diameter of 1-100 nm and preferably within the range of a few nm to several dozen nm are added to the light-diffusing adhesive agent to the extent required to maintain the diffusion properties of the film, and can be used to adjust the refractive index upwards. The greater the refractive index of the microparticles the better, normally 1.8 or greater, and preferably 1.9 or greater and even more preferably 2.0 or more. It is undesirable to have the diameter of the microparticles greater than 100 nm, as this interferes with transparency, and although no limit is particularly specified, diameters of around 1 nm or more are preferable, for example 5 nm or more is preferred from the point of view of availability and ease of dispersal. By adding inorganic microparticles with a high refractive index as described to a light-diffusing adhesive agent with a low refractive index, and raising the refractive index of the base material of the adhesive agent, it is possible to form a light-diffusing adhesive agent with a refractive index greater than the refractive index of the light guide of between 1.45-1.7, and using this light-diffusing adhesive agent with its high refractive index to bond the directional light-diffusing film and the light guide, the critical angle at the interface between the light guide and the light-diffusing adhesive agent is eliminated, and total reflection is prevented. Thus light which escapes laterally due to total reflection under normal circumstances can be efficiently extracted from the light guide, allowing the light to be effectively used.

It should be noted that Fig. 12 shows the linear light transmission rate for a light-diffusing film with the directional light-diffusing film combined with the light-diffusing adhesive agent. In the example in Fig. 12, the transmission rate in the vertical direction is high, the diffusion peak being reached around 10-15° away from the vertical, with light diffusion in the vertical direction being small, allowing the light which the light guide is designed to deliver to be incident on the liquid crystal display panel side, with oblique diffusion. The particular problem to be resolved by the invention in the surface light source device is uneven brightness in the oblique direction, and it is possible to effectively eliminate the uneven brightness using the oblique diffusion of said light-diffusing film. In particular, in a liquid crystal display device there is usually a significant unevenness in brightness between 10-50° and in that sense the fact that the light-diffusing film used in the invention has a diffusion peak between 10-40° means that it is optimal for preventing unevenness in brightness. As has been described above, this angle can be varied as desired by changing the difference in the refractive index between regions of the film with a high refractive index and regions with a low refractive index, the diameter of the columnar structures, the thickness of the film, and the angle of irradiation. In addition to this characteristic, it is possible to easily prevent deterioration in the light transmission rate due to light present in the gap between the light guide and the light-diffusing film or between the light-diffusing film and the prism sheet by bonding the light-diffusing film to the light guide or the prism sheet using an adhesive agent, this being preferable from the point of view of improving contrast and visibility in the liquid crystal display device as well.

Furthermore, where the surface light source device of the invention is positioned behind the liquid crystal display panel, the surface light source device will be positioned below the lower polarizing plate of the liquid crystal display panel, with the result that optical films such as the directional light-diffusing film and prism sheets are positioned far away from the liquid crystal display panel. Thus even if faults are present in an optical film such as the directional light-diffusing film and prism sheet, not only will the faults be difficult to observe, but because directional light-diffusing films which do not have a regularly repeating optical structure are easy to obtain, it is unlikely that Moire fringes will be generated between the liquid crystal display panel and the optical sheet.

### Optimal Configurations for Embodying the Invention

The invention will now described with specific reference to embodiments, although the invention is not limited to the following embodiments.

### Embodiment 1

The surface light source device of the first embodiment of the invention will now be described with reference to Fig. 4(b) and Fig. 6. The surface light source device of the first embodiment, as shown in Fig. 6, comprises point light source 11, light guide 12, reflector 13, directional light-diffusing film 14, and prism sheet 15. Point light source 11 comprises a single chip-type LED, and this chip-type LED was positioned facing the central part of the end surface (end surface to which light is incident) of light guide 12, as shown in Fig. 4(b). Light guide 12 was formed of polycarbonate resin, and a plurality of concentric circular diffusion patterns centered on the light-emitting unit were formed on the lower surface of the light guide. The diffusion patterns were formed as depression 12d with a cross-section that was triangular or roughly semi-circular (half-oval) in shape, each diffusion pattern extending in a direction which intersected the direction connecting the light emitting unit and the position in which said diffusion pattern was placed. Reflector 13 comprising aluminum sheet was provided on the lower surface of the light guide.

The directional light-diffusing film used in Embodiment 1 was manufactured as follows. In other words, a polyethylene terephthalate film was coated with 50 µm of light sensitive polymer using DuPont's OMNIDEX HRF 600 or HRF 150, a mask having a plurality of round perforation patterns being made to adhere closely to the surface of this light-sensitive polymer using the hard contact method. However, the round perforations in the mask were within the range of 500 nm to 30 µm, with the average diameter being 2 µm. Ultraviolet light from a mercury lamp was condensed to a parallel beam using a lens system, and irradiated from above the mask in the normal direction. The length of the irradiation varied from several seconds to several minutes. Thereafter it was subject to thermal processing for one hour at 120°C. As a result, a light-diffusing film having regions of high refractive index with a columnar structure in the normal direction of the film was obtained with a cross-sectional structure matching the perforated pattern of the mask. The refractive index of the polymer matrix of the light-diffusing film was 1.47, and the refractive index of the regions with a high refractive index was 1.52.

The diffusion characteristics of the directional light-diffusing film thus obtained were as shown in Fig. 10(b) and Fig. 11. The AOV in the vertical direction was less than 10°, the linear light transmission rate greater than 5%, and the maximum diffusion angle ±15°. Incidentally, with the surface light source device of Embodiment 1, the maximum diffusion is between ±10°-±20°, and although an unevenness in brightness is generated which extends in parallel to the end of the surface light source device from the point light source, it is possible to effectively eliminate the unevenness in brightness by positioning the light-diffusing film so that the diffusion is at a maximum between 10°-20° from the vertical direction. It has been confirmed that by using a directional point light source efficiently, the unevenness in brightness in this embodiment is output from the center of the light guide.

### Embodiment 2

A second embodiment of the invention will now be described. In the surface light device of the first embodiment, the reflector was provided separately to the light guide, but apart from the fact that an aluminum film was formed by vacuum deposition on the surface formed on the diffusion pattern of the lower surface of the light guide, the remainder of the structure was identical to that of Embodiment 1. By forming a thin metal film directly on the lower surface of the light guide, the light incident on the optical sheet can be reflected at the light-reflecting surface comprising the thin metal film and returned to the light guide, making it possible to ensure reflection of the light more reliably than the device of Embodiment 1 which reflects light using total reflection, and it is thus possible to improve the efficiency of light use.

### Embodiment 3

With the surface light source device of Embodiment 3, the device was made with an identical structure to that of Embodiment 1 apart from the fact that directional light-diffusing film 14 of Fig. 6 was positioned on prism sheet 15. When this surface light source device was used to illuminate a liquid crystal panel, a bright image display device with no unevenness in brightness was obtained.

### Embodiment 4

Fig. 7 shows a separate embodiment of the surface light source device of the invention. The surface light source device of Embodiment 4 was obtained in the same way as in Embodiment 1 apart from the fact that light-diffusing film 14 was bonded to light guide 12 using light-diffusing adhesive agent 16. In this embodiment said light-diffusing adhesive agent was prepared in the following manner. In other words filler was added to a base coating with 1.5 parts of isocyanate hardener (D-90; manufactured by Soken Kagaku) per 100 parts of acrylic adhesive agent with a refractive index of 1.50, and mixed in an agitator for one hour. This light-diffusing adhesive was coated onto an 8µm thick parting sheet (PET3801, made by Rintech) to reach a thickness of 25 µm after drying, and with the forming of a light-diffusing adhesive layer after drying, a parting sheet (K-14, manufactured by Teijin) was bonded onto the light-diffusing adhesive layer to obtain a light-diffusing adhesive sheet. The filler used was silicon epoxy beads (refractive index 1.43, average particle diameter 1.0 µm) with an inclusive volume of 3%. The HAZE value of the light-diffusing adhesive agent thus obtained was 25. This light-diffusing adhesive agent was made to adhere to said light-diffusing film, and bonded to the light guide by pressure adhesion using a roller to obtain the surface light source device of the invention. When this surface light source device was used to illuminate a liquid crystal panel, a bright image display device with no unevenness in brightness was obtained.

In the above embodiment, a light-diffusing adhesive agent with a HAZE value of 15 was obtained using a 2% inclusive volume of silicon resin beads, and used to form a surface light source device in the same way as above, and when this surface light source device was used to illuminate a liquid crystal panel, a bright image display device with no unevenness in brightness was obtained in the same way as for the surface light source device of Embodiment 4.

### Embodiment 5

In Embodiment 4, the surface light source device was manufactured using the following as a light-diffusing adhesive agent. In other words filler was added to a base coating with 1.5 parts of isocyanate hardener (D-90; manufactured by Soken Kagaku) per 100 parts of acrylic adhesive agent with a refractive index of 1.50, and a dispersal liquid of TiO₂ or ZrO₂ butanol or MEK (methyl ethyl ketone) with a particle diameter size of several nm further added, and then mixed in an agitator for one hour, producing a light-diffusing adhesive agent. This light-diffusing adhesive agent was coated onto an 8µm thick parting sheet 2 (PET3801, made by Rintech) to reach a thickness of 25 µm after drying, and with the forming of a light-diffusing adhesive layer after drying, a parting sheet (K-14, manufactured by Teijin) was bonded onto the light-diffusing adhesive layer to obtain a light-diffusing adhesive sheet. The filler used was silicon epoxy beads (refractive index 1.43, average particle diameter 1.0 µm) with an inclusive volume of 3%. The HAZE value of the light-diffusing adhesive agent thus obtained was 25. It should be noted that the refractive index of this light-diffusing adhesive agent can be adjusted to the desired refractive index by adding in the appropriate quantity of microparticles of TiO₂ or ZrO₂ butanol or MEK dispersal agent. For example, when wishing to bring the refractive index of the light-diffusing adhesive agent to 1.6, it will be sufficient to adjust the proportions so that TiO₂ or ZrO₂ are present in 35 units per weight in solid measure, with the base resin (including filler) at 65 parts per weight. This light-diffusing adhesive agent was made to adhere to said light-diffusing film, and bonded to the light guide by pressure adhesion using a roller to obtain the surface light source device of the invention. When this surface light source device was used to illuminate a liquid crystal panel, a bright image display device with no unevenness in brightness was obtained.

In the above embodiment, a light-diffusing adhesive agent with a HAZE value of 15 was obtained using a 2% inclusive volume of silicon resin beads, and used to form a surface light source device in the same way as above, and when this surface light source device was used to illuminate a liquid crystal panel, a bright image display device with no unevenness in brightness was obtained in the same way as for the surface light source device of Embodiment 5.

### Embodiment 6

In this embodiment, the surface light source device had the structure shown in Fig. 13. In other words the surface light source device comprised a light-emitting unit not shown in the diagram, light guide 12, reflector 13, directional light-diffusing film 14, and light-diffusing adhesive layer 16, the light-emitting unit being a so-called point light source comprising a light-emitting diode (LED or the like) provided in a position facing the center of the surface of the light guide to which light is incident. Moreover, the lower surface 12b of light guide 12 had formed on it a plurality of prism patterns P in concentric circles centered on the LED. The surface light source device of the invention was manufactured using a light-diffusing adhesive agent identical to that of Embodiment 5, and with a light-diffusing film 14 identical to that of Embodiment 5 bonded to light guide 12. When this surface light source device was used to illuminate a liquid crystal panel, a bright image display device with no unevenness in brightness was obtained.

### Embodiment 7

In this embodiment, the surface light source device comprised light diffusing film 14, light guide 12, light-emitting unit 11, prism sheet 15 and reflector 13 as shown in Fig. 6, the light-emitting unit comprising a so-called point light source such as a light-emitting diode (LED). With this embodiment, the point light source was a single lamp, and as shown in Fig. 5 was positioned so as to fit into the angle at the end surface (the surface to which light is incident) of the light guide. The light guide was formed of transparent polycarbonate resin or polymetacrylic resin with a high refractive index, and a plurality of diffusion patterns were formed on the rear surface (lower surface) of the light guide. Diffusion patterns were disposed concentrically centered on the light-emitting unit, and formed on the lower surface of the light guide. The diffusion patterns were formed as depressions with a cross-section that was triangular or roughly semi-circular in shape. It should be noted that even if a prism sheet with prism patterns is positioned on the upper part of the reflector disposed on the upper side of the light guide, the same characteristics will be expressed. Each diffusion pattern extends in a direction which intersects the direction connecting the light-emitting unit and the position in which said diffusion pattern is placed, in other words they extend concentrically. In place of a reflector, a light-reflecting surface may be formed with a thin metal film on the rear surface of the light guide where said uneven patterns are formed. At this time the light reflected at the light-reflecting surface comprising the thin metal film can be reflected back to the light guide, allowing the light to be reliably reflected by using total reflection. Thus the efficiency with which the light is used can be improved as there is no leakage of light from the rear surface of the optical sheet. The directional light-diffusing film was positioned on top of the light guide. It may also be positioned between this and the prism sheet, or on top of the prism sheet.
When these surface light source devices were used to illuminate a liquid crystal panel, a bright image display device with no unevenness in brightness was obtained.

### Effect of the Invention

As has been described above, according to the surface light source device of the invention, since the directional light-diffusing film or the optical film comprising said directional light-diffusing film and a light-diffusing adhesive layer which selectively diffuses the unevenness in brightness of light output diagonally to the rear surface of the light guide is positioned facing the rear surface of the light guide, it is possible to provide a uniform surface light source device which eliminates unevenness in the brightness of the light leaking diagonally from the surface of the light guide.

Furthermore with the surface light source device of the invention, where the surface light source device is placed behind the image display panel, since the optical sheet which is the directional light-diffusing film, light prism sheet or the like is positioned far away from the image display panel, even where faults are present in the optical sheet, not only are the faults difficult to see, Moire fringes are unlikely to be generated between the image display panel and the optical sheet due to the fact that the columnar structures of the directional light-diffusing film are positioned randomly, or due to changes in the diameter of the columnar structures.

## Claims

1. A surface light source device having a light-emitting unit comprising a point light source and a light guide, a reflecting surface being provided on the reverse side of the light guide, and also having a prism pattern, **characterized in that** a directional light-diffusing film is provided beside the light-outputting surface of the light guide which diffuses and allows light to pass, comprising two phases with differing refractive indices, the phase with the greater refractive index including a plurality of regions with a columnar structure extending in the direction of the thickness of the film, said columnar structure being perpendicular to the normal direction of the film, and whose maximum diffusion angle is between 10°-40°.

2. The surface light source device as claimed in claim 1, **characterized in that** said directional light-diffusing film is bonded to said light guide or prism sheet with prism pattern using a light-diffusing adhesion agent containing microparticles with a diameter of 0.1-50 µm.

3. The surface light source device as claimed in claim 2, **characterized in that** said light-diffusing adhesion agent contains minute particles with diameters in the range of 1-100 nm whose refractive index is 1.8 or greater.

4. The surface optical source device as claimed in claims 2 and 3, **characterized in that** the refractive index of said light-diffusing adhesion agent is 1.55 or greater.

5. The surface optical source device as claimed in any of claims 1-4, **characterized in that** said columnar structure has a structure such that the refractive index varies gradually along the axis of said columnar structure.

6. The surface light source device as claimed in any of claims 1-5, **characterized in that** said light-emitting unit is positioned facing the center of the end surface of the light guide.

7. The surface light source device as claimed in any of claims 1-6, **characterized in that** said light-emitting unit is positioned facing the angled end surface of the light guide.
